# EUROPÄISCHE PATENTANMELDUNG

(11) **EP 1 431 905 A2**
(43) Veröffentlichungstag der Anmeldung: **23.06.2004**
(21) Anmeldenummer: 03028519.1
(22) Anmeldetag: 10.12.2003
(51) Int. Cl.: G06K 9/00

(54) **Biometrischer Sensor**

(30) Priorität: 20.12.2002 DE 10260186
(71) Anmelder: Infineon Technologies AG, 81669 München (DE)
(72) Erfinder: Pöppel, Gerhard, 93049 Regensburg (DE); Walter, Jürgen, 93047 Regensburg (DE)
(74) Vertreter: Epping, Hermann, Fischer

(57) **Zusammenfassung**

Die Erfindung betrifft einen biometrischen Sensor mit einer Berührungsfläche, die in einer ersten und zweiten Richtung mit einem Rasterabstand (R1, R2) flächig verteilt erstreckend angeordnete Sensorelemente (2) zur Bilderfassung und eine zumindest zwischen den Sensorelementen (2) angeordnete elektrisch leitende Struktur (3), zur Ableitung elektrischer Ladungen, aufweist, wobei die Sensorelemente (2) in einer Richtung (X, Y) zumindest einen breiteren Rasterabstand (R1, R2) als in der anderen Richtung (R1, R2) aufweisen.
Weiterhin betrifft die Erfindung einen biometrischen Sensor mit einer Berührungsfläche, die in einer ersten und zweiten Richtung mit einem Rasterabstand (R1, R2) flächig verteilt erstreckend angeordnete Sensorelemente (2) zur Bilderfassung aufweist, wobei eine elektrisch leitende Struktur über den Sensorelementen (2) angeordnet ist.

## Beschreibung

Die Erfindung betrifft einen biometrischen Sensor mit einer Berührungsfläche und im Raster angeordneten Sensorelementen zur Bilderfassung und einer in oder auf der Berührungsfläche angeordneten elektrisch leitenden Struktur zur Ableitung elektrischer Ladungen.

Biometrische Sensoren, z. B. Fingerabdrucksensoren, dienen der Erfassung personenspezifischer Merkmale. Hierzu weisen sie eine Berührungsfläche auf, die mit Sensorelementen in einer flächig gerasterten Anordnung versehen ist. Die durch die Sensorelemente ermittelten Bildpunkte werden in einer Auswerteeinheit dergestalt ausgewertet, daß anhand der erfaßten Bildpunkte eine Reproduktion der betreffenden Hautpartien erfolgen kann und in Abhängigkeit der Reproduktion somit eine Authentifizierung in eine Zugangskontrolle umgesetzt wird.

Die Erfassung der biometrischen Merkmale über eine Berührungsfläche erfolgt wahlweise statisch oder dynamisch. Die statische Vorgehensweise erfordert das Auflegen des Körperteils auf die Berührungsoberfläche, bei der dynamischen Bilderfassung wird das Körperteil über die Berührungsfläche bewegt. Durch eine geeignete Auswertesoftware kann zum Beispiel der Fingerabdruck als ganzes identifiziert werden.

Bekannte biometrische Sensoren sind üblicherweise auf einem Trägermaterial aufgesetzt. Da biometrische Sensoren nicht fest in einem Gehäuse oder gleichwertigen, abschirmenden Vorrichtung eingebaut werden und somit vor externen Einflüssen nicht mehr ausreichend geschützt sind, können sie sehr leicht beschädigt oder zerstört werden. Elektrostatische Aufladungen beispielsweise bei notwendiger Berührung des Benutzers fließen unkontrolliert durch die integrierten Schaltungsteile ab und setzen diese außer Funktion.

Bei einer solchen Entladung entstehen Spannungen, die in Abhängigkeit des Umfelds und der Lufteigenschaften bis zu 20000 Volt erreichen. Erfahrungsgemäß stellt die ESD- (ESD, electrostatic damage) verträgliche Spannung für einen Fingerabdrucksensorchip immer einen limitierenden Faktor bezüglich des Designs der Sensorelemente der Berührungsfläche dar.

Um das zuverlässige Arbeiten derartiger Sensorelemente zu gewährleisten, muß sichergestellt werden, daß keine elektrostatischen Aufladungen auf eine Oberfläche gelangen und somit die Funktion der Sensorelemente beeinträchtigen. Ein solcher Schutz gegen elektrostatische Aufladung sieht üblicherweise elektrische Leiter an der Oberfläche des betreffenden Gegenstandes vor, die so angeordnet sind, daß elektrische Ladungen über eine in der Oberfläche befindliche, elektrisch leitende Struktur abgeleitet werden können.

Fingerabdrucksensoren weisen hierfür elektrisch leitende Strukturen auf, die an der Oberfläche angeordnet sind. Die leitende Struktur bzw. der ESD-Schutz ist beispielsweise gitterförmig um die Sensorelemente herum angeordnet und mit Masse verbunden und wirkt somit ähnlich wie ein Blitzableiter. Über eine Vielzahl in der Berührungsfläche angeordnete Kontaktierungen können elektrische Ladungen in die leitende Struktur abgeleitet werden, so daß keine Gefahr besteht, das diejenigen Komponenten, die in oder unter der Berührungsfläche angeordnet sind, zu stark aufgeladen werden.

Die notwendige Anzahl der Sensorelemente hat zur Folge, daß die Breite der Struktur des ESD-Schutzes durch die Größe der Sensorelemente und somit deren Zwischenräume vorgegeben ist. Durch diese geometrischen Vorgaben ist die Ableitfähigkeit der elektrisch leitenden Struktur eingeschränkt. Eine breitere Schutzstruktur geht zu Lasten der Anzahl der Sensorelemente und damit der Auflösung.

Trotzdem weisen die bisher bekannten biometrischen Sensoren mit Berührungsfläche keinen ausreichenden ESD-Schutz auf.

Der Erfindung liegt daher die Aufgabe zugrunde, einen biometrischen Sensor mit einer Berührungsfläche zur Bilderfassung und einen in der Berührungsfläche angeordneten ESD-Schutz vorzusehen, der in seiner Gestaltungsform eine hohe Flexibilität aufweist, so daß unabhängig von der Anordnung der Sensorelemente ein zuverlässiger ESD-Schutz vorgesehen ist.

Diese Aufgabe wird erfindungsgemäß dadurch gelöst, daß die Sensorelemente in einer Richtung zumindest einen breiteren Rasterabstand als in der anderen Richtung aufweisen. Weiterhin wird die Aufgabe durch eine den Sensorelementen überlagerte, elektrisch leitende Struktur gelöst.

Der erfindungsgemäße biometrische Sensor hat den Vorteil, daß aufgrund der flexiblen Gestaltungsform der ESD Struktur eine variable und somit größere Stromtragfähigkeit an einer beliebigen Stelle der Berührungsfläche bereitgestellt werden kann. Die ESD-Festigkeit wird somit wesentlich erhöht, so daß elektrische Spannungen ohne Gefahr für die Bauelemente abgeleitet werden können.

Eine vorteilhafte Ausgestaltung der Erfindung sieht vor, daß eine elektrisch leitende Struktur zwischen den Sensorelementen angeordnet ist und die Sensorelemente in einer Richtung zumindest einen breiteren Rasterabstand als in der anderen Richtung aufweisen, so daß die Verbreiterung des Rasterabstands der Sensorelemente in einer Richtung einen ESD-Schutz mit einer größeren Stromtragfähigkeit bereitstellt.

Insbesondere im Einsatz bei dynamischen Bilderfassungssystemen bietet sich hier die Möglichkeit, ein neues Layout der ESD-Struktur vorzunehmen. Da das Körperteil zur Bilderfassung bei diesem Verfahren in zumindest einer Richtung bewegt wird, kann die Anzahl der in dieser Richtung angeordneten Sensorelemente wesentlich verringert werden und somit eine Verbreiterung der ESD-Struktur vorgenommen werden, ohne daß dabei die Chipfläche vergrößert werden muß. Die für eine größtmögliche Auflösung notwendige Anzahl an Sensorelementen wird über die jeweils quer zur Bewegungsrichtung festgelegte Anzahl an Sensorelementen realisiert.

Somit ergeben sich die Vorteile, daß eine wesentliche Erhöhung der ESD-Festigkeit erreicht wird, ohne einen Verlust der Auflösung zu bewirken.

Eine vorteilhafte Weiterbildung der Erfindung sieht vor, daß die zwischen den Sensorelementen angeordnete elektrisch leitende Struktur entsprechend der Rasterabstände der Sensorelemente ausgebildet ist.

Ein besonderer Vorteil ist weiterhin, daß die elektrisch leitende Struktur in einer weiteren Richtung eine Verbreiterung aufweisen kann.

Besonders günstig für eine hohe punktuelle Stromtragfähigkeit erweist sich die Ausbildung der elektrisch leitenden Struktur als Baumstruktur, wobei die Baumstruktur abwechselnd und gegenläufig aufgebaut sein kann. Möglich ist die Ausbildung der elektrisch leitenden Struktur in beliebiger Form beispielsweise als Streifen oder als fraktale Struktur.

Bei einem biometrischen Sensor mit vorgegebenem Rasterabstand sich in einer ersten und zweiten Richtung flächig verteilt erstreckend angeordneten Sensorelementen erweist es sich als besonders vorteilhaft, daß eine geeignete elektrisch leitende Struktur, beispielsweise in Form von Streifen, als Baumstruktur oder als fraktale Struktur, über den Sensorelementen angeordnet ist. Somit ist es nicht erforderlich, die Anordnung der Sensorelemente zu verändern.

In vorteilhafter Weise weist auch diese elektrisch leitende Struktur eine beliebige Form, beispielsweise eine fraktale Struktur, auf, so daß die flexible Gestaltung der Struktur die Realisierung einer besonders hohen Leitfähigkeit an bestimmten Stelle der Berührungsfläche erlaubt.

Unabhängig von der Ausführungsform ist die elektrisch leitende Struktur zur Kontaktierung mit einem Masseanschluß mit einem elektrisch leitenden Anschluß, der beispielsweise als Rahmen ausgeführt sein kann, verbunden.

Der erfindungsgemäße biometrische Sensor ist auch für eine Berührungsfläche mit in einer einzigen Richtung sich erstrekkend angeordneten Sensorelementen anwendbar. Den in einer Zeile oder Spalte angeordneten Sensorelementen einer Berührungsfläche kann eine beliebige Form einer elektrisch leitenden Struktur überlagert werden.

Die erfindungsgemäße Verwendung sieht vor, daß eine Verbreiterung der ESD-Struktur zur Bewegungsrichtung oder quer zur Bewegungsrichtung erfolgt. Dies kann zum einen über eine minimale Vergrößerung der Berührungsfläche oder bei gleichbleibender Berührungsfläche über Verkleinerung der Sensorelemente erfolgen, ohne daß ein Auflösungsverlust zu verzeichnen wäre.

Nachfolgend wird die Erfindung anhand von Figuren näher erläutert. Gleiche oder sich entsprechende Elemente in verschiedenen Figuren sind mit gleichen Bezugszeichen versehen.

Es zeigen:
Figur 1 die Aufsicht einer dem Stand der Technik entsprechende Berührungsfläche eines Fingerabdrucksensors,
Figur 2 bis 4 verschiedene geometrische Anordnungen der Sensorelemente eines erfindungsgemäßen Fingerabdrucksensors in einer Aufsicht,
Figur 5 die Schnittdarstellung A-A des erfindungsgemäßen Ausführungsbeispiels der Figur 4,
Figur 6 eine dem Stand der Technik entsprechende Anordnung von Sensorelementen einer Berührungsfläche eines Fingerabdrucksensors,
Figur 7 ein Ausführungsbeispiel eine elektrisch leitenden Struktur und
Figur 8 ein weiteres erfindungsgemäßes Ausführungsbeispiel eines biometrischen Sensors.

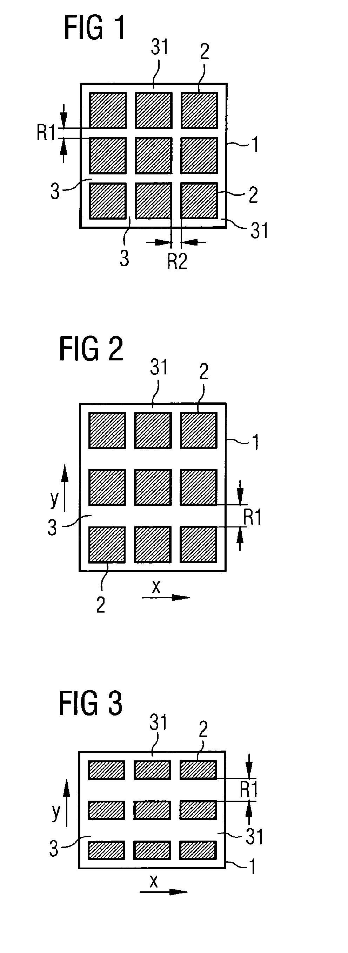

In Figur 1 ist in Aufsicht eine Berührungsfläche 1 eines biometrischen Sensors dargestellt, auf der Sensorelemente 2 in einer flächigen Matrix angeordnet sind. Zwischen den einzelnen Sensorelementen 2 ist eine elektrisch leitende Struktur 3 angeordnet, welche über einen Anschluß 31, hier als Rahmen ausgefürt, mit einem hier nicht gezeigten Masseanschluß verbunden ist. Diese elektrisch leitende Struktur 3 ist für den ESD-Schutz vorgesehen. Auf diese Weise wird eine auf der Berührungsfläche auftretende elektrostatische Spannung kontrolliert über die ESD-Struktur 3 entladen.

Figur 2 zeigt die Aufsicht der Berührungsfläche 1 eines erfindungsgemäßen Ausführungsbeispiels. Die Abstände der Sensorelemente 2 sind in Y-Richtung gegenüber den Abständen in X-Richtung vergrößert. Folglich weist in dieser Ausführungsform die ESD-Struktur 3 in Y-Richtung gegenüber der ESD-Struktur gemäß Figur 1 eine Verbreiterung auf, so daß eine vergrößerte Stromtragfähigkeit erzielt ist. In diesem Ausführungsbeispiel wird eine Bewegungsrichtung von oben nach unten über die Berührungsfläche 1 vorausgesetzt. Dies hat eine Verbreiterung der Berührungsfläche 1 längs zur Bewegungsrichtung zur Folge. Da jedoch die Anzahl und somit die Dichte der quer zur Bewegungsrichtung angeordneten Sensorelemente 2 beibehalten wurde, hat dies keine Verschlechterung der Auflösung zur Folge, sondern eine wesentliche Erhöhung der ESD-Festigkeit.

Die in Figur 3 dargestellte Berührungsfläche 1 weist, wie bereits im Ausführungsbeispiel 2 erläutert, eine ebenso in Y-Richtung gegenüber der X-Richtung verbreiterte ESD-Struktur 3 auf. In diesem Ausführungsbeispiel wurde durch eine Verkleinerung der Sensorelemente 2 eine in Y-Richtung verbreiterte Struktur 3 erzielt, ohne dabei die Größe der Berührungsfläche 1 gegenüber der Anordnung gemäß dem Stand der Technik (Figur 1) zu verändern.

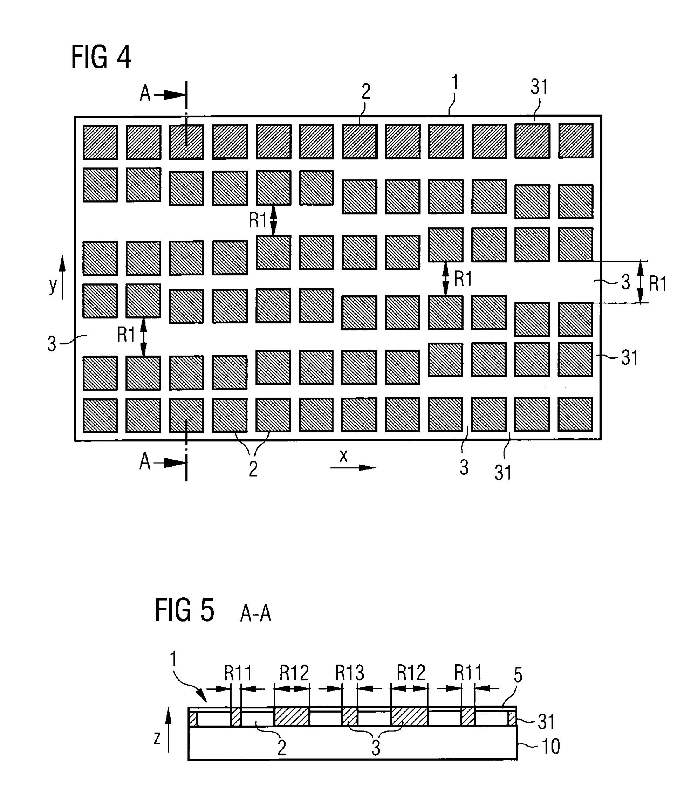

Ein weiteres Ausführungsbeispiel der erfindungsgemäßen ESD-Struktur 3 ist in Figur 4 dargestellt. Die Sensorelemente 2 des Berührungsfeldes 1 sind nur noch in Y-Richtung entlang einer Linie angeordnet. In Y-Richtung sind sie dergestalt angeordnet, daß sich der Abstand R1 in Y-Richtung zwischen zwei Sensorelementen 2 in X-Richtung verändert, daß heißt, abnimmt oder zunimmt. Aufgrund der sich ergebenden Zwischenräume der Sensorelemente 2 nimmt die ESD-Struktur in X-Richtung eine Baumstruktur an. Durch diese geometrische Optimierung der Anordnung der Sensorelemente 2 und somit der Optimierung der Form der in den Zwischenräumen zwischen den Sensorelementen 2 ausgebildeten ESD-Struktur 3, ist eine Maximierung der Leitfähigkeit der ESD-Struktur 3 in bestimmten Bereichen des Berührungsfeldes 1 erzielt worden.

Die in den Figuren 2 bis 4 gezeigten Ausführungsbeispiele sollen verdeutlichen, daß je nach Anwendungsbereich verschiedene Möglichkeiten in Frage kommen, die Ausrichtung der Sensorelemente 2 so zu verändern, daß verschiedenste ESD-Strukturen 3 umgesetzt werden können, um eine möglichst hohe ESD-Festigkeit zu erzielen und die Stromtragfähigkeit zu erhöhen.

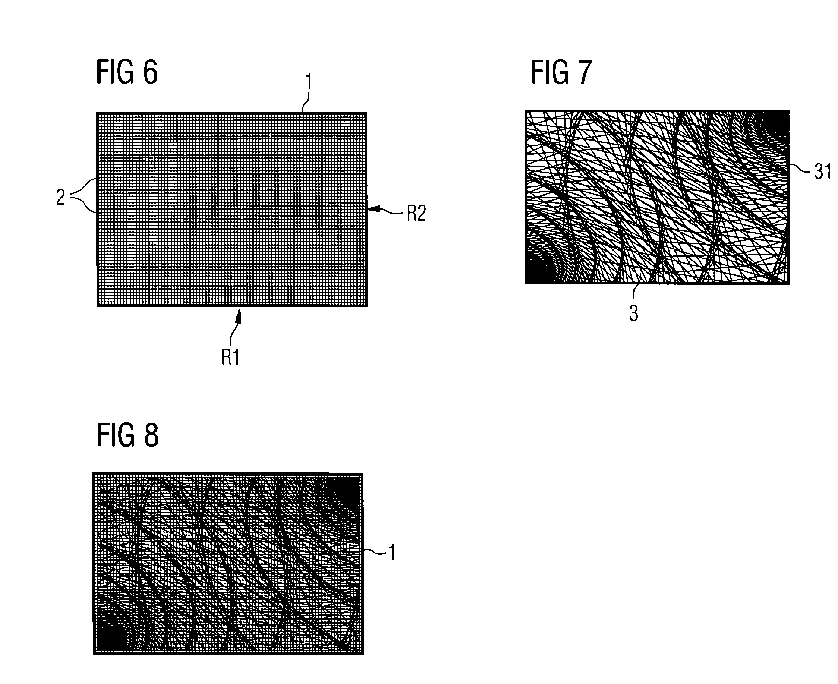

In Figur 5 ist die Schnittdarstellung A-A des Ausführungsbeispiels gemäß Figur 4 dargestellt. Auf einem Trägermaterial 10 sind die Sensorelemente 2 flächig verteilt mit den Rasterabständen R11, R12 und R13 angeordnet. Die elektrisch leitende Struktur 3 füllt die Rasterabstände R11, R12 und R13 auf und ist über den Rand 31 mit einem Masseanschluß verbunden. Die Oberseiten der Sensorelemente 2 und der elektrisch leitenden Struktur 3 sind zum Schutz gegen Korrosion von einer Passivierungsschicht 5 bedeckt.

Weiterhin weist die ESD-Struktur 3 eine in Z-Richtung verbreiterte Form auf, so daß die elektrisch leitende Struktur 3 die Sensorelemente 2 in Z-Richtung überragt. Somit wird sichergestellt, daß bei einer Berührung der Berührungsfläche 1 eine sichere Ableitung über die ESD-Struktur ermöglicht wird und die Verbreiterung der ESD-Struktur 3 in einer ersten und/oder zweiten Richtung X, Y und/oder in einer weiteren Richtung Z eine höhere Stromtragfähigkeit auch punktuell sicherstellt.

In Figur 6 ist eine dem Stand der Technik entsprechende Anordnung von Sensorelementen 2 einer Berührungsfläche 1 eines Fingerabdrucksensors dargestellt. Die Sensorelemente 2 weisen zwei in einer ersten und einer zweiten Richtung sich in der Größe entsprechende Rasterabstände R1, R2 auf. Sollen die Rasterabstände R1, R2 der Sensorelemente 2 beibehalten werden, kann eine innerhalb der Rasterabstände R1, R2 der Sensorelemente 2 angeordnete EDS-Struktur 3 keine ausreichende ESD-Festigkeit aufweisen. Durch die Anordnung einer ESD-Struktur 3, beispielsweise als fraktale Struktur, gemäß Figur 7, über den Sensorelementen 2 muß die Anordnung der Sensorelemente 2 nicht verändert werden, um eine besonders hohe Leitfähigkeit an bestimmten Stellen der Berührungsfläche zu erzielen.

Wie in Figur 8 dargestellt, wird die in Figur 7 gezeigte elektrisch leitende Struktur 3 den Sensorelementen 2 der Berührungsfläche 1 der Figur 6 überlagert, wobei die Sensorelemente 2 und die Rasterabstände R1, R2 der Sensorelemente 2 entsprechend der Fläche der elektrisch leitenden Struktur 3 überdeckt werden. Die fraktale Struktur der elektrisch leitenden Struktur 3, die keine gleichmäßigen Rasterabstände aufweist, erlaubt eine gezielte Erhöhung der Stromtragfähigkeit an vorbestimmten Stellen und trägt somit zu einer generell erhöhten ESD-Festigkeit des biometrischen Sensors bei.

### Bezugszeichenliste

- 1: Berührungsfläche
- 2: Sensorelement
- 3: elektrisch leitende Struktur
- 5: Passivierungsschicht
- 10: Trägermaterial
- 31: Anschluß
- R1: Rasterabstand
- R2: Rasterabstand
- R11: Rasterabstand
- R12: Rasterabstand
- R13: Rasterabstand

## Patentansprüche

1. Biometrischer Sensor mit einer Berührungsfläche (1), die mit einem Rasterabstand (R1, R2) sich in einer ersten und zweiten Richtung flächig verteilt erstreckend angeordnete Sensorelemente (2) zur Bilderfassung und eine zumindest zwischen den Sensorelementen (2) angeordnete elektrisch leitende Struktur (3), zur Ableitung elektrischer Ladungen, aufweist
**dadurch gekennzeichnet, daß**
die Sensorelemente (2) in einer Richtung (X, Y) zumindest einen breiteren Rasterabstand (R1, R2) aufweisen als in der anderen Richtung (X, Y).

2. Biometrischer Sensor nach Anspruch 1,
**dadurch gekennzeichnet, daß**
die zwischen den Sensorelementen (2) angeordnete elektrisch leitende Struktur (3) entsprechend der Rasterabstände (R1, R2) der Sensorelemente (2) ausgebildet ist.

3. Biometrischer Sensor nach Anspruch 1 oder 2,
**dadurch gekennzeichnet, daß**
die elektrisch leitende Struktur (3) zumindest eine Verbreiterung in einer weiteren Richtung (Z) aufweist.

4. Biometrischer Sensor nach einem der Ansprüche 1 bis 3,
**dadurch gekennzeichnet, daß**
die elektrisch leitende Struktur (3) als Baumstruktur ausgebildet ist.

5. Biometrischer Sensor nach einem der Ansprüche 1 bis 3,
**dadurch gekennzeichnet, daß**
die elektrisch leitende Struktur (3) streifenförmig ausgebildet ist.

6. Biometrischer Sensor nach einem der Ansprüche 1 bis 3,
**dadurch gekennzeichnet, daß**
die elektrisch leitende Struktur (3) als fraktale Struktur ausgebildet ist.

7. Biometrischer Sensor nach einem der Ansprüche 1 bis 6,
**dadurch gekennzeichnet, daß**
die elektrisch leitende Struktur (3) mit einem elektrisch leitenden Anschluß (31) verbunden ist, zur Kontaktierung mit einem Masseanschluß.

8. Biometrischer Sensor nach Anspruch 4,
**dadurch gekennzeichnet, daß**
die ausgebildete Baumstruktur der elektrisch leitenden Struktur (3) abwechselnd und gegenläufig aufgebaut ist.

9. Biometrischer Sensor mit einer Berührungsfläche (1), die mit einem Rasterabstand (R1, R2) sich in einer ersten und zweiten Richtung flächig verteilt erstreckend angeordnete Sensorelemente (2) zur Bilderfassung aufweist,
**dadurch gekennzeichnet, daß**
über den Sensorelementen (2) eine elektrisch leitende Struktur (3), zur Ableitung elektrischer Ladungen, angeordnet ist.

10. Biometrischer Sensor nach Anspruch 9,
**dadurch gekennzeichnet, daß**
die Fläche der Sensorelemente (2) und der Rasterabstand zwischen den Sensorelementen (2) entsprechend der flächenmäßigen Ausdehnung der elektrisch leitenden Struktur (3) bedeckt werden.

11. Biometrischer Sensor nach einem der Ansprüche 9 oder 10,
**dadurch gekennzeichnet, daß**
die elektrisch leitende Struktur (3) eine fraktale Struktur aufweist.

12. Biometrischer Sensor nach einem der Ansprüche 9 bis 11,
**dadurch gekennzeichnet, daß**
die elektrisch leitende Struktur (3) mit einem elektrisch leitenden Anschluß (31) verbunden ist, zur Kontaktierung mit einem Masseanschluß.

13. Verwendung des biometrischen Sensors nach einem der Ansprüche 1 bis 8 zur Bilderfassung, wobei ein abzutastender Gegenstand in einer Bewegungsrichtung (X, Y) über den Sensor geführt wird und die Rasterabstände (R1, R2) der Sensorelemente (2) in Bewegungsrichtung verbreitert sind.

14. Verwendung des biometrischen Sensors nach einem der Ansprüche 1 bis 8 zur Bilderfassung, wobei ein abzutastender Gegenstand in einer Bewegungsrichtung (X, Y) über den Sensor geführt wird und die Rasterabstände (R1, R2) der Sensorelemente (2) quer zur Bewegungsrichtung verbreitert sind.
